# EUROPEAN PATENT APPLICATION

(11) **EP 3 614 556 A1**
(43) Date of publication of application: **26.02.2020**
(21) Application number: 18190023.4
(22) Date of filing: 21.08.2018
(51) Int. Cl.: H02P 6/10, H02P 29/50

(54) **TORQUE RIPPLE REDUCTION FOR A GENERATOR**

(71) Applicant: Siemens Gamesa Renewable Energy A/S, 7330 Brande (DK)
(72) Inventor: Freire, Nuno Miguel Amaral, 7330 Brande (DK); Wu, Zhan-Yuan, Sheffield, South Yorkshire S10 4BB (GB); Xie, Ge, 7100 Vejle (DK)
(74) Representative: Aspacher, Karl-Georg

(57) **Abstract**

It is provided a method of controlling a generator (111) to reduce a harmonic torque ripple, the generator (111) comprising a stator (275), a rotor and a main bearing (278) for allowing the rotation of the rotor, the method comprising:
measuring an acceleration signal (243) using an accelerometer (271) mounted on a stationary ring (279) of the main bearing (278);
deriving, based on the vibration signal (243), a reference harmonic current (Iqhref), in particular, an amplitude (251) and a phase (253) of a reference harmonic current (Iqhref) ;
injecting a current into the generator (111) based on the reference harmonic current (Iqhref).

## Description

### Field of invention

The present invention relates to a method and to an arrangement for controlling a generator to reduce a harmonic torque ripple. Further, the invention relates to a wind turbine comprising a generator and the arrangement for controlling the generator to reduce a harmonic torque ripple.

### Art Background

A wind turbine may comprise a rotor shaft with blades connected thereto and may comprise a generator, in particular a high power permanent magnet synchronous machine having a generator rotor which is mechanically connected to the rotor shaft.

Conventionally, torque ripple control may be a big challenge for a high power permanent magnet synchronous machine. The torque of the machine cannot be measured or estimated precisely, which applies in particular to harmonics of the torque. Therefore, conventionally, the torque ripple itself, e.g. higher order harmonics of the torque, cannot be used as a feedback in a controller.

Conventionally, one approach to minimize the torque ripple may be to inject a corresponding frequency harmonic current on the q-axis, and force the d-axis harmonic current to be zero at the meantime. Current injection may for example be achieved by appropriately controlling a converter having high power input terminals connected with high power output terminals of the generator, in particular permanent magnet synchronous machine. For example, for minimizing the 6f (six times the fundamental electrical frequency of the machine) torque ripple, a 6f harmonic current may be injected on the q-axis as a reference and the 6f harmonic d-axis current may be set to zero. Further, the 6f I_{q} may be controlled as the reference by a controller, for instance, resonant controller or PI controllers in the harmonic reference frame. However, in this approach, the amplitude and the phase angle of the optimal reference harmonic current may change due to different operating conditions. Therefore, the fixed parameters (reference harmonic currents) are not reliable for the long-term operating torque ripple controller according to the conventional art.

Another conventional approach to control the torque ripple may be using a measurement signal (for example strain gauge or microphone) as the feedback signal. The strain gauge can provide a reliable feedback but the accuracy for the harmonic components may not be good enough. The microphone measured signal may contain a large time delay which a conventional controller may not be able to handle, especially for a high power direct drive machine that has a large pole number.

Conventionally, the torque ripple caused by a direct drive permanent magnet wind generator may bring large vibration and noise. According to the international standard IEC 61400-11, turbine noise may need to be measured at standard IEC position. However, finding an accurate and reliable feedback to represent the IEC position noise has always been a trouble for the closed-loop torque ripple and noise control.

The torque ripple may be conventionally minimized by injecting a corresponding frequency harmonic current on the dq reference frame. Using a fixed open loop harmonic current injection may be a simple solution, but the needed reference may change due to the different generator operating conditions.

EP 2 552 013 A1 discloses a method to reduce the torque ripple by using a look-up table to generate harmonic dq currents reference according to the operating condition (turbine working points). This method fixes the look-up table (LUT), however the parameters inside the LUT may need to be tuned due to the individual difference from turbine to turbine, or the different ambient and/or operating temperatures.

EP3297156 A1 introduces an auto tuned torque ripple control method. This control method is based on the torque ripple controller (with harmonic current injection) illustrated in EP 2552013 A1. The values in the Look-up table will be optimized automatically according to a noise feedback (e.g. a microphone).

In view of the above described prior art, there may be still a need for a method and arrangement for controlling a generator to reduce a harmonic torque ripple, combining efficiency of control and, at the same time, cost-effectiveness and easiness of installation.

### Summary of the Invention

This need may be met by the subject matter according to the independent claims. Advantageous embodiments of the present invention are described by the dependent claims.

According to an aspect of the present invention it is provided a method of controlling a generator to reduce a harmonic torque ripple, the generator comprising a stator, a rotor and a main bearing for allowing the rotation of the rotor, the method comprising:
measuring a vibration signal using an accelerometer mounted on a stationary ring of the main bearing,
deriving, based on the vibration signal, a reference harmonic current,
injecting a current into the generator based on the reference harmonic current.
In particular, amplitude and phase of the reference harmonic current may be derived.

The method may be implemented in hardware and/or software and may in particular be performed by a wind turbine controller or in general a generator controller. The generator may in particular be or comprise a permanent magnet synchronous machine, in which plural permanent magnets are attached to a rotor which rotates relative to a stator, the stator having at least one set of stator windings, for example one or more sets of three-phase stator windings. The generator may be comprised in a wind turbine.

The accelerometer may measure the acceleration in tangential or radial or other direction of the stationary ring of the main bearing of the generator. The vibration signal may comprise one or more higher harmonics of a fundamental electric frequency of the generator, the fundamental frequency being in particular related to a frequency of revolutions of a generator rotor rotating relative to a fixed stator.

The amplitude and the phase of a reference harmonic current (in particular representing a current to be injected in order to reduce a particular harmonic of the torque ripple) may be derived in dependence and/or associated with the value of the operating point. The reference harmonic current may be described as a trigonometric function, for example a sine function or a cosine function having as argument a particular harmonic of the fundamental frequency of the generator and further having a phase. In particular, the argument of the trigonometric function may be a sum of a particular harmonic (such as 2, 4, 6 or even higher) times the electrical angle of the generator added by the phase value. The trigonometric function may be multiplied by the amplitude as derived according to embodiments of the present invention, for defining the reference harmonic current.

A reference harmonic current may optionally be derived directly for a particular harmonic of the torque ripple. The trigonometric function is not required, and the dependency on the operating point would be taken into account automatically.

One or more harmonic torque ripples may be reduced according to embodiments of the present invention. For each harmonic of the torque ripple to be reduced, a respective reference harmonic current may be associated and finally also injected into the generator. In particular, when one or more harmonics of the torque ripple are desired to be reduced, a current may be injected into the generator based on one or more reference harmonic currents (which may in particular be derived independently and added together).

The current injection may be performed by appropriately controlling for example a converter of the generator, wherein converter power input terminals may be connected to power output terminals of the generator. The converter may in particular comprise or be an AC-DC-AC converter which may be adapted to convert a variable frequency power stream (e.g. output from the generator) to a fixed frequency power stream. The converter may in particular comprise a number of high power switches, such as IGBTs or any other suitable devices, which may be driven by gate driver circuits.

According to an embodiment of the present invention, the method further comprises deriving, based on the vibration signal, the amplitude and the phase of the reference harmonic current. Depending on the operational state of the turbine, the reference harmonic current may change. Thereby, also taking into account the operational state of the turbine to derive the reference harmonic current, still also based on the vibration signal, may improve the control method.

According to an embodiment of the present invention, the value of the operating point is determined based on a, in particular, measured fundamental torque and a, in particular measured, rotational speed of the generator. The fundamental torque and the rotational speed of the generator (the rotational speed also referred to as frequency of the generator) may be appropriate operating parameters to define the working point or the working range the generator is operating in. In particular, depending on the thus defined working point or working range, the amplitude and the phase of the reference harmonic current may vary. Thus, it is reasonable and effective, to derive amplitude and phase of the reference harmonic current in dependence of the working range or working point the generator is operating in.

The operating point may define an operating condition of the generator, in particular in terms of one or more operating parameters. In particular, two operating parameters, such as the fundamental torque generated by the generator and the electrical frequency (also referred to as fundamental frequency) of the generator may be appropriate operating parameters to characterize the operating point. It is also possible to use other operating parameters to define operating points, for example, turbine power, generator power, rotor speed and generator mechanical frequency etc. Embodiments of the present invention may define one or more operating regions or ranges, for example a region in a two-dimensional (or higher-dimensional) coordinate system in which two or more operating parameters are indicated on the axis of the coordinate system. A particular operating region may be defined as the two-dimensional or higher-dimensional range for which one or more operating parameters deviate less from one or more center values by a predetermined deviation. Thereby, it becomes possible to control the generator regarding reduction of a harmonic torque ripple in dependence of the operating point or operating region the generator is operating in. Thereby, the harmonic torque ripple reduction may be more effective, thereby in turn improving the performance of the generator and further reducing wear and damage of components of the converter.

The method may in particular be performed repeatedly over time. Thereby, the mechanic vibration may be (for example continuously or in a sampled manner) measured and also the operating point the generator is operating in may be continuously or in a sampled manner determined. In turn, the amplitude and phase may repeatedly be derived based on the respective vibration signal measured in the respective time and the value of the operating at the corresponding time. Further, continuously or repeatedly or in a sampled manner, a current may be derived which is based on the reference harmonic current and the current may be injected into the generator. According to an embodiment of the present invention, deriving the amplitude and the phase of the reference harmonic current comprises filtering the vibration signal thereby reducing components of the vibration signal other than a particular harmonic (of interest to be reduced) to obtain a filtered vibration signal, in particular time averaging the RMS value of filtered vibration signal, looking up an initial amplitude and an initial phase associated with the value of the operating point from a storage, performing an optimization of the amplitude and phase based on the initial amplitude and the initial phase so that the vibration signal is reduced, in particular minimized, and storing, associated with the value of the operating point, the optimized amplitude and optimized phase in a storage.

The filtered vibration signal may be used directly for optimisation of the harmonic current reference that is to be controlled for injection into the generator.

The vibration signal may comprise plural frequency components, such as a component of a fundamental frequency and one or more harmonics of the fundamental frequency. The filtering (using an analogue and/or digital filter) the vibration signal may be performed to reduce non-interesting frequency components, but to pass through at least one frequency component which is desired to be reduced in the torque ripple.

The filtered vibration signal is AC signal, which may be used directly for torque ripple control. Alternatively, RMS value of the AC signal may be used instead of the AC signal itself. The optional time averaging may further reduce noise in the filtered vibration signal.

A look-up table of the initial amplitude and initial phase (associated or corresponding to the particular working point) may be provided or may be accessible in an electronic storage. The initial values for amplitude and phase may have been determined previously, for example by performing controller tuning involving simulations and/or experimental tests. However, the initial amplitude and initial phase may not properly reflect the correct value for the reference harmonic current to be injected to reduce the torque ripple, but other values may be more effective for reducing the harmonic torque ripple. Therefore, starting from these initial values, an optimization is performed, wherein amplitude and/or phase is varied with the aim of reducing the mechanic vibration of one or more desired harmonics, as is reflected by the vibration signal which may represent a feedback during the optimization. The optimized amplitude and phase are then also stored, for example in an electronic storage, for future use and also for the use to derive the current based on the reference harmonic current which may then finally be injected into the generator.

It should be understood that features individually or in any combination disclosed, described, provided or applied to a method of operating a generator may also be applied, individually or in any combination, to an arrangement for controlling a generator according to embodiments of the present invention and vice versa.

According to another aspect of the present invention it is provided an arrangement for controlling a generator to reduce a harmonic torque ripple, the arrangement comprising: an accelerometer mountable on a stationary ring of the main bearing of the generator and adapted to measure a vibration signal,
a processor adapted:
   to derive, based on the vibration signal, an amplitude and a phase of a reference harmonic current; and
a driver adapted to inject a current into the generator based on the reference harmonic current.

The driver may in particular be configured as an AC-DC-AC converter.

The method and the arrangement of the present invention provide an accurate and reliable feedback solution for the wind generator torque ripple control. Using only one accelerometer in the main bearing stationary ring is efficient and cost effective with respect to other previously known solutions. The accelerometer of the present invention sensor is easy to install due to the location close to the main shaft. Very often an accelerometer, which is readily available from other purposes, such as bearing condition monitoring, can be used also for the purposes of the present invention. The requirements (e.g. temperature, installation direction, etc.) of the sensor are low.

According to a third aspect of the present invention it is provided a wind turbine, comprising a shaft with rotor blades connected thereto, a generator mechanically coupled with the shaft, and an arrangement according to one of the preceding embodiments, the driver in particular configured as a converter that is controlled based on the reference harmonic current.

Embodiments of the present invention are now described with reference to the accompanying drawings. The invention is not restricted to the illustrated or described embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates a wind turbine according to an embodiment of the present invention including an arrangement for controlling a generator according to an embodiment of the present invention;
Fig. 2 schematically illustrates an arrangement for controlling a generator according to an embodiment of the present invention;
Fig. 3 partially illustrates the wind turbine of Fig. 1;
Fig. 4 schematically illustrates a generator as may be comprised in the wind turbine illustrated in Fig. 1 according to an embodiment of the present invention;
Fig. 5 illustrates graphs for illustrating embodiments of a control method of the present invention compared with control methods of the prior art.
Fig. 6 illustrates graphs for illustrating the performance of a control method of the present invention compared with control methods of the prior art.

### Detailed Description

The illustration in the drawings is in schematic form. It is noted that in different figures, similar or identical elements are provided with the same reference signs.

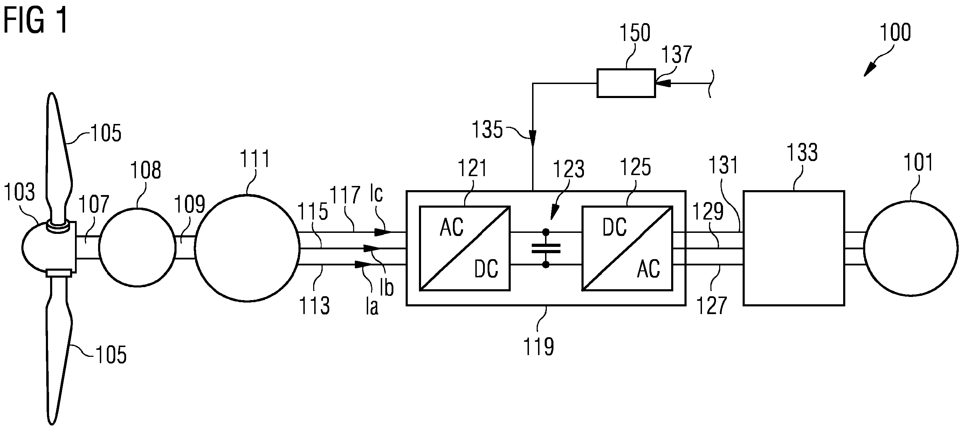

**Fig. 1** illustrates in a schematic form a wind turbine 100 which provides electric energy to a utility grid 101. The wind turbine comprises a hub 103 to which plural rotor blades 105 are connected. The hub is mechanically connected to a main shaft 107 whose rotation is transformed by an optional gear box 108 to a rotation of a secondary shaft 109, wherein the gear box 108 may be optional in which case the wind turbine may be a direct drive wind turbine. The main shaft 107 or the secondary shaft 109 drives a generator 111 which may be in particular a synchronous permanent magnet generator providing a power stream in the three phases or windings 113, 115 and 117 to a converter 119 which comprises a AC-DC portion 121, a DC-link 123 and a DC-AC portion 125 for transforming a variable AC power stream to a fixed frequency AC power stream which is provided in three phases or windings 127, 129, 131 to a wind turbine transformer 133 which transforms the output voltage to a higher voltage for transmission to the utility grid 101.

The converter 119 is controlled via a converter command 135 (Vdref, Vqref) which is derived and supplied from a control arrangement 150 according to an embodiment of the present invention, which receives at least one input signal 137, such as including at least a vibration signal and including stator winding currents and/or one or more reference values and/or one or more quantities indicative of the operation of the generator 111 or any component of the wind turbine 100.

The generator in Fig. 1 comprises a single three-phase stator winding or multiple three-phase stator windings. Thereby, the winding 113 carries the stator current Iₐ, the winding 115 carries the stator current I_{b} and the winding 117 carries the stator current I_{c}. The control arrangement 150 controls the converter 119.

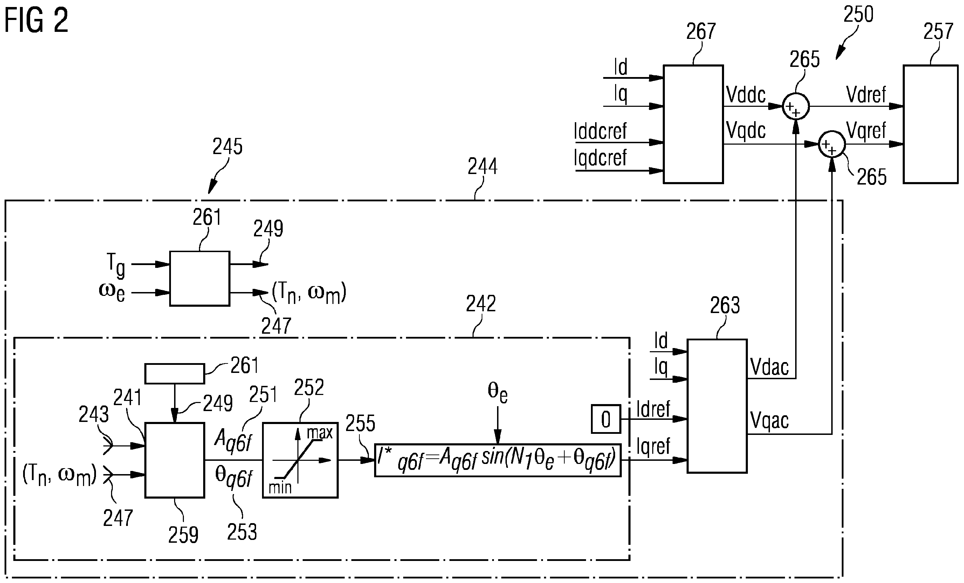

**Fig. 2** schematically illustrates an arrangement 150 for controlling a generator, for example the generator 111 and converter 119 as illustrated in Fig. 1, to reduce a harmonic torque ripple according to an embodiment of the present invention, as well as the fundamental operation and power flow in the generator system.

The arrangement 150 illustrated in Fig. 2 comprises an input port 241 for receiving an vibration signal 243 indicating a measured mechanic vibration of the generator, for example generator 111 illustrated in Fig. 1.

Furthermore, the arrangement 150 comprises a processor 245 which is adapted to determine a value 247 of an operating point of the generator, for example represented by the two values (Tₙ, ωₘ), one of a plurality of predetermined fundamental torques and one of a plurality of predetermined rotational speeds of the generator.

The processor 245 is further adapted to derive, based on the vibration signal 243 and optionally also based on the value 247 of the operating point, an amplitude 251 (e.g. A_{q6f} for a 6^{th} harmonic of the basic or fundamental frequency f) and a phase 253 (for example Θ_{q6f}, for the 6^{th} harmonic of the fundamental frequency) of a reference harmonic current (for example I_{q6f} for a reference current of a 6^{th} harmonic), wherein the harmonic current is also indicated by reference sign 255.

Further, the arrangement 150 comprises a driver 257 (e.g. configured as converter 119 in Fig. 1) which is adapted to supply voltages to the generator.
For performing these functions, the arrangement 150 comprises an auto-tuning controller 259 which receives the vibration signal 243 as well as the value 247 of the load point and further receives an enable signal 249 which is derived by a load point detection module 261 which derives the value of the load point 247 based on the torque T_{g} of the generator and the electrical frequency ωₑ of the electric generator. The auto-tuning controller 259 is based on a search algorithm.

The reference harmonic current is labelled in Fig. 2 also as Iqhref, i.e. a harmonic current reference or a q-component of a harmonic current reference.

The arrangement 150 further comprises a harmonic current regulator 263 which receives (e.g. a representation of) the reference harmonic current (Iqhref) as well as the d-component Idhref of the reference harmonic current which is usually zero. Furthermore, the harmonic current regulator 263 receives the currents Id, Iq (derived e.g. from Ia, Ib, Ic by Transformation into the dq-system) of at least one set of stator windings of the generator, such as generator 111. The d-component and the q-component of the stator current are for example derived based on the three phase currents Ia, Ib, Ic by performing a park transformation. A band pass filter will be used to extract the target harmonics (e.g. the 6^{th} harmonic) from Id and Iq currents.

The harmonic current regulator 263 comprises circuitry to derive from the input values a reference harmonic voltage Vdac, Vqac, i.e. components in the d/q-coordinate system which are supplied to addition elements 265. Using the addition elements 265, a sum of a reference fundamental voltage Vddc, Vqdc with the reference harmonic voltage Vdac, Vqac is calculated and output as a reference voltage Vdref, Vqref which is supplied to the driver 257, which may for example be configured as a converter.

**Fig. 2** shows the torque ripple controller 244 which is used in the direct drive permanent magnet synchronous generator. The harmonic current references on the d- and q-axes are given into the harmonic current regulator for minimizing the torque ripple in the generator. In the harmonic current reference calculation module, the harmonic current reference on the d-axis is e.g. set as 0; the harmonic current reference on the q-axis is given as a harmonic sinusoidal signal, the amplitude and phase angle of this signal are both obtained by the torque ripple controller, e.g. auto tuning controller.

In Fig. 2 the load point detection module 261 will give the enable/disable signal and the load point information (Tn, ωm) to the auto tuning controller.

The arrangement 150 comprises the harmonic current reference calculation module or processor 242 which harbours the auto-tuning controller 259 and the limitation element 252.

The arrangement 150 further comprises a fundamental current regulator 267 which receives the stator winding currents Id, Iq as well as fundamental current references Iddcref, Iqdcref based on which the fundamental voltage references Vddc, Vqdc are calculated.

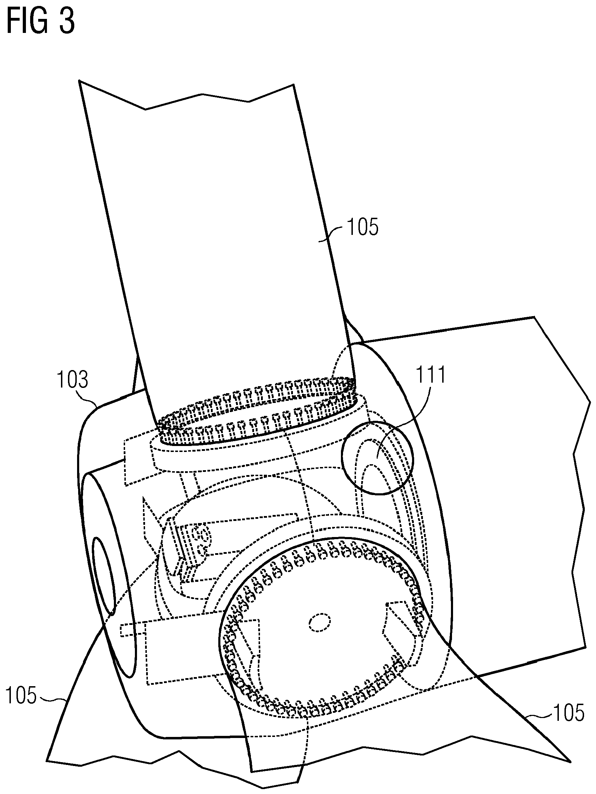

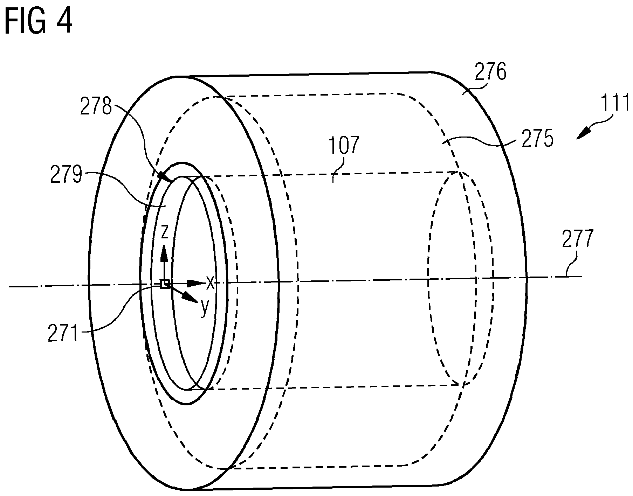

The vibration signal 243 illustrated in Fig. 2 is derived through an acceleration measurement by an accelerometer 271, which is mounted on the generator 111, as is schematically illustrated in **Figs. 3** and **4****.**

Thereby, Fig. 3 schematically illustrates a portion of the wind turbine 100 including the generator 111 as illustrated in Fig. 1.
Fig. 4 schematically illustrates in more detail the generator 111, which includes a stator 275 and a rotor 276 externally arranged with respect to the stator 275.
According to other embodiments of the present invention (not shown) the rotor may be internally arranged with respect to the stator 275.
The rotor 276 rotates around a rotation axis 277 also defining the axial direction (x) of the generator 111. Perpendicular to the axial direction (x) a radial direction (y) and a tangential direction (z) are defined.
The stator 275 is arranged around the rotation axis 277 and comprises a not illustrated stator yoke having teeth and slots which are spaced apart in the tangential direction (z). Around the teeth, plural not illustrated conductor windings are arranged.
The rotor 276 is fixedly connected to the main shaft 107 by means of a rotary bearing 278, which has a stationary ring 279 fixed to the stator and a rotary ring (not represented) fixed to the rotor 276 the main shaft 107.

In the embodiment of the attached figs. 3 and 4, where the rotor 276 is externally arranged with respect to the stator 275, the stationary ring 279 is an inner ring of the rotary bearing 278 of the generator 111.

The accelerometer 271 is fixed and mounted at any position on the stationary ring 279.
The accelerometer may be mounted for measurement of vibration in the tangential direction (z). Alternatively, the accelerometer may be mounted for measurement of vibration in the radial direction (y). The latter may have the advantage that existing accelerometers for generator/bearing monitoring could also be used.

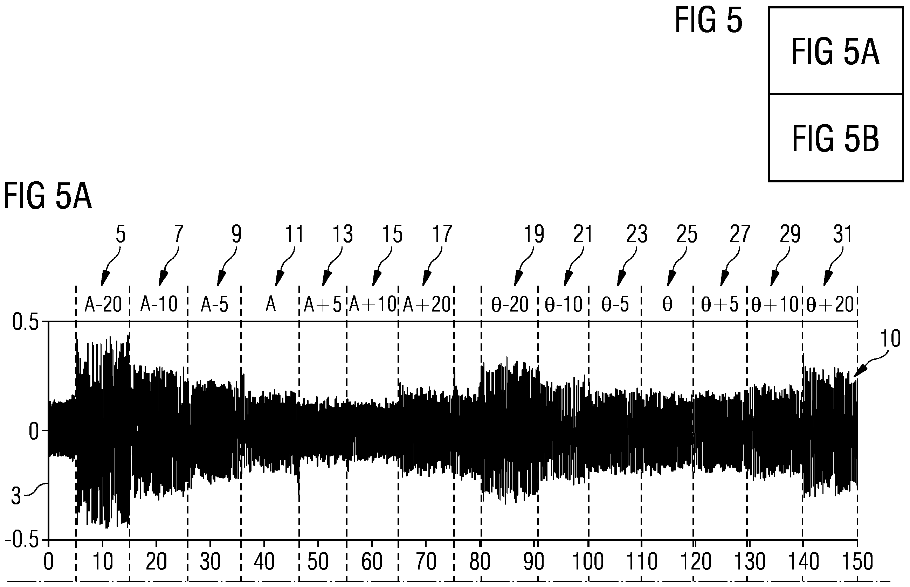

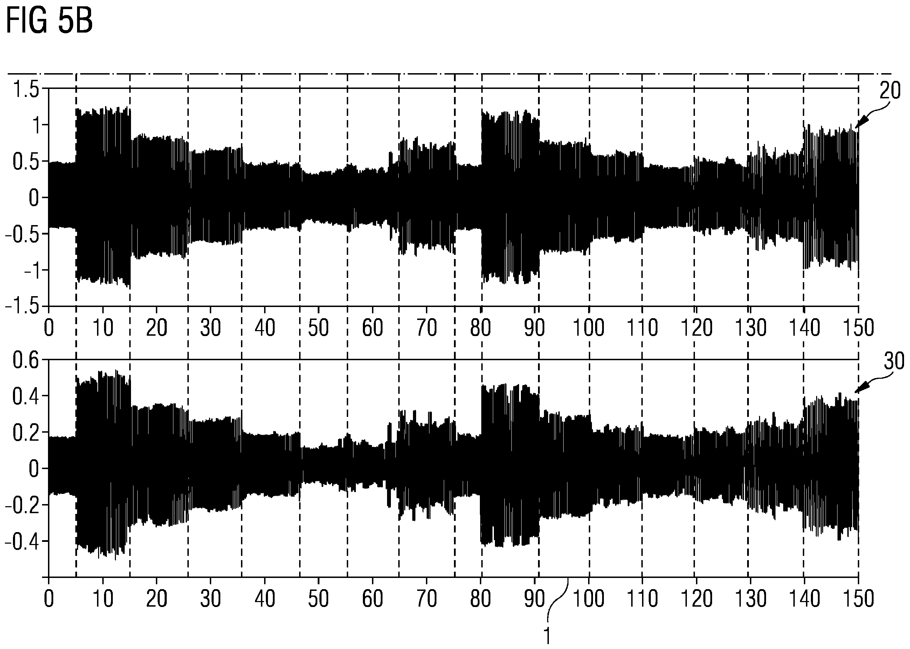

**Fig. 5** illustrates graphs in coordinate systems, wherein abscissas 1 denote the time, while the ordinates 3 denote amplitudes of a 6f harmonic vibration and noise. Thereby, the graphs are divided into columns:
- a first column 5 (A - 20) to the case, where a 6f current is injected which has the optimal amplitude decreased by 20,
- a second column 7 (A - 10) to the case, where a 6f current is injected which has the optimal amplitude decreased by 10,
- a third column 9 (A - 5) to the case, where a 6f current is injected which has the optimal amplitude decreased by 5,
- a fourth column 11 (A) to the case, where the optimal amplitude of the 6f current is injected,
- a fifth column 13 (A + 5) to the case, where a 6f current is injected which has the optimal amplitude increased by 5,
- a sixth column 15 (A + 10) to the case, where a 6f current is injected which has the optimal amplitude increased by 10,
- a seventh column 17 (A + 20) to the case, where a 6f current is injected which has the optimal amplitude increased by 20,
- a eighth column 19 (Θ - 20) to the case, where a 6f current is injected which has the optimal phase decreased by 20,
- a ninth column 21 (Θ - 10) to the case, where a 6f current is injected which has the optimal phase decreased by 10,
- a tenth column 23 (Θ - 5) to the case, where a 6f current is injected which has the optimal phase decreased by 5,
- a eleventh column 25 (Θ) to the case, where the optimal phase of the 6f current is injected,
- a twelfth column 27 (Θ + 5) to the case, where a 6f current is injected which has the optimal phase increased by 5,
- a thirteenth column 29 (Θ + 10) to the case, where a 6f current is injected which has the optimal phase increased by 10,
- a fourteenth column 31 (Θ + 20) to the case, where a 6f current is injected which has the optimal phase increased by 20.
The first trace 10 in Fig. 5 indicates a microphone derived signal for the different cases of harmonic current injection. The second trace 20 in Fig. 5 indicates a value of the acceleration as measured by an accelerometer mounted on a stator plate at an axial end of the generator 111. The second trace 20 may be measure at the drive end (i.e. the axial end which is closer to the hub 103) or at the axially opposite non-drive end.
The third trace 30 in Fig. 5 indicates a value of the acceleration as measured by the accelerometer 271.

The values shown by the third trace 30 obtained through the accelerometer 271 of the present invention, are qualitatively similar to the values of the first and second trace 10, 20. Consequently, embodiments of the present invention may provide an accurate and reliable feedback solution for the wind generator torque ripple and noise control.

The accelerometer may give a faster and more stable signal response compared to a microphone sound detection signal. The accelerometer signal may be friendlier to the turbine controller. The use of only one accelerometer at the stationary ring of the rotary bearing provides an accurate and reliable feedback solution for the wind generator torque ripple control.

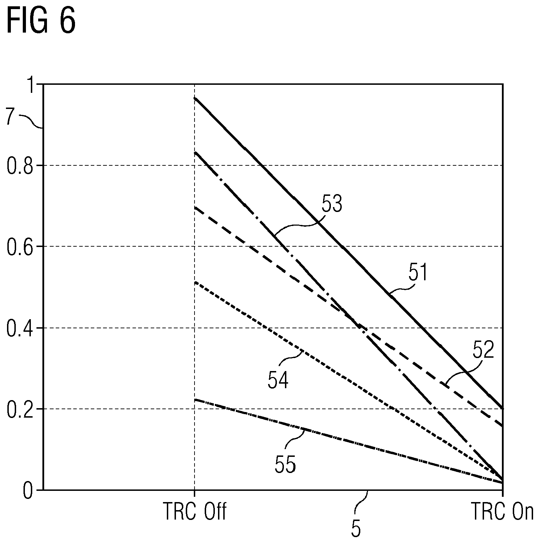

**Fig. 6** shows the sensor signal response when the accelerometers are put into different locations and controlled by torque ripple controller at two different statuses (Off and On) .
The graph in Fig. 6 is in coordinate systems, wherein abscissas 5 denote the status, while the ordinates 7 denote amplitudes of a 6f harmonic.
The first line 51 in Fig. 6 indicates a variation of amplitude for a sensor (accelerometer) mounted at the generator drive end.
The second line 52 in Fig. 6 indicates a variation of amplitude for a sensor (accelerometer) mounted at the generator non-drive end.
The third line 53 in Fig. 6 indicates a variation of amplitude for a combination of signals measured by two sensors (accelerometers) respectively mounted at the generator drive end and at the generator non-drive end. The combination may for example comprise to form a sum or an average of the two signals.
The fourth line 54 in Fig. 6 indicates a variation of amplitude for the accelerometer 271 of Fig. 4, mounted for measurement of vibration in the tangential direction (z).
The fifth line 55 in Fig. 6 indicates a variation of amplitude for the accelerometer 271 of Fig. 4, mounted for measurement of vibration in the radial direction (y).
The comparison between line 54 and 53 makes evident that a similar performance can be found between the signal from accelerometer 271 at tangential direction and the combined signal with two accelerometers mounted at the generator drive end and non-drive end.

The comparison between line 55 and 54 makes evident that the accelerometer 271 in radial direction may be used in replacement of that in tangential direction.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of controlling a generator (111) to reduce a harmonic torque ripple, the generator (111) comprising a stator (275), a rotor (276) and a main bearing (278) for allowing the rotation of the rotor, the method comprising:
measuring a vibration signal (243) using an accelerometer (271) mounted on a stationary ring (279) of the main bearing (278);
deriving, based on the vibration signal (243), a reference harmonic current (Iqhref);
injecting a current into the generator (111) based on the reference harmonic current (Iqhref).

2. Method according to claim 1, wherein the acceleration signal (243) relates to an acceleration in a tangential direction (z) of the generator (111).

3. Method according to claim 1, wherein the acceleration signal (243) relates to an acceleration in a radial direction (y) of the generator (111).

4. Method according to one of the preceding claims, further comprising:
determining a value (247) of an operating point of the generator (111);
deriving, based on the vibration signal (243) and the value (247) of the operating point, the amplitude (251) and the phase (253) of the reference harmonic current (Iqhref).

5. Arrangement (150) for controlling a generator (111) to reduce a harmonic torque ripple, the arrangement comprising:
an accelerometer (271) mountable on a stationary ring (279) of the main bearing (278) of the generator (111) and adapted to measure a vibration signal (243),
a processor (242) adapted:
to derive, based on the vibration signal (243), an amplitude (251) and a phase (253) of a reference harmonic current (Iqhref); and
a driver (257) adapted to inject a current into the generator (111) based on the reference harmonic current (Iqhref).

6. Arrangement (150) for controlling a generator (111) according to claim 5, further comprising an auto-tuned torque ripple controller (259) based on a search algorithm to derive the amplitude (251) and the phase (253) of the reference harmonic current (Iqhref).

7. Arrangement (150) for controlling a generator (111) according to claim 5 or 6, wherein the generator (111) comprises a stator (275) and a rotor (276), the rotor (276) being externally arranged with respect to the stator (275), the accelerometer (271) being mounted on an inner ring (279) of the main bearing (278).

8. Wind turbine (100), comprising:
a shaft (107) with rotor blades (105) connected thereto;
a generator (111) mechanically coupled with the shaft; and
an arrangement (150) according to one of the preceding claims, the driver in particular being configured as a converter that is controlled based on the reference harmonic current.
